# EUROPEAN PATENT SPECIFICATION

(11) **EP 3 822 042 B1**
(45) Date of publication and mention of the grant of the patent: **25.05.2022**
(21) Application number: 20169566.5
(22) Date of filing: 15.04.2020
(51) Int. Cl.: B25J 7/00, B25J 9/00, B25J 15/08

(54) **THREE-DEGREE-OF-FREEDOM FLEXIBLE HINGE MECHANISM-TYPE PIEZOELECTRIC MICRO-GRIPPER**
PIEZOELEKTRISCHER MIKRO-GREIFER MIT FLEXIBLEM SCHARNIERMECHANISMUS MIT DREI FREIHEITSGRADEN
MICRO-PINCE PIÉZOÉLECTRIQUE DE TYPE MÉCANISME À CHARNIÈRE FLEXIBLE À TROIS DEGRÉS DE LIBERTÉ

(30) Priority: 13.11.2019 CN 201911104253
(43) Date of publication of application: 19.05.2021
(73) Proprietor: Ningbo University, Ningbo, Zhejiang 315211 (CN)
(72) Inventor: CUI, Yuguo, Ningbo, Zhejiang 315211 (CN); NIE, Zhigang, Ningbo, Zhejiang 315211 (CN); SHAO, Qianjun, Ningbo, Zhejiang 315211 (CN); YANG, Yiling, Ningbo, Zhejiang 315211 (CN); MA, Jianqiang, Ningbo, Zhejiang 315211 (CN)
(74) Representative: FRKelly

(56) References cited:
- CN-A- 102 497 129
- CN-A- 104 647 347
- CN-A- 105 619 377
- CN-A- 106 553 138
- RO-B1- 127 385

## Description

### Technical Field

The present invention belongs to the field of nano-positioning technology, and relates to a three-degree-of-freedom flexible hinge mechanism-type piezoelectric micro-gripper.

### Background Art

Micro-grippers are end actuators capable of generating nano-scale motion accuracy and resolution, and can be applied to the frontier technical fields of MEMS, bioengineering, etc. In the field of MEMS, the micro-gripper can pick up and handle micro-parts such as micro-shafts and micro-gears, as well as micro-components such as micro-motors and micro-pumps, and can also achieve assembly of the micro-parts and the micro-components in combination with micro-motion platforms. In the field of bioengineering, the micro-gripper can be used to capture and release cells, and can also inject or extract a constituent into or from the cells in combination with a micro-impact probe.

The existing micro-grippers are less flexible and mostly can only achieve micro-motion in the gripping direction, while the micro-motions in other directions need to be implemented by an actuation mechanism at the front end of the micro-gripper, so that the entire micro-assembly and micro-operation system has a complex structure, large size and high costs. Patent No. CN 201510513950.9 discloses a four-degree-of-freedom piezoelectric micro-gripper (its four degrees of freedom indicate that each gripper finger has two degrees of freedom, and the micro-gripper with two fingers has four degrees of freedom), wherein each gripper finger can produce a micro-motion in the gripping direction (that is, in the width direction of the gripper finger) and in a direction perpendicular to the gripping direction (that is, in the thickness direction of the gripper finger), which improves the flexibility compared to a micro-gripper with gripper fingers producing micro-motion only in the gripping direction, but the piezoelectric micro-gripper cannot produce a micro-motion in the length direction of the gripper fingers, and is essentially a two-degree-of-freedom micro-gripper. In addition, the micro-gripper disclosed in this patent is composed of two layers of piezoelectric ceramic wafers, and the piezoelectric ceramic wafers are very brittle, so that the micro-gripper is easily broken. Moreover, the micro-gripper disclosed in this patent has a complicated manufacturing process comprising photolithography, etching, gluing and laser cutting, and therefore has high manufacturing costs. A further known design is disclosed in CN 104 647 347 A.

### Summary of the Invention

The technical problem to be solved by the present invention is to provide a three-degree-of-freedom flexible hinge mechanism-type piezoelectric micro-gripper, each gripper finger of which can not only produce micro-motions in a gripping direction (i.e., in the thickness direction of the gripper finger) and in a direction (i.e., in the height direction of the gripper finger) perpendicular to the gripping direction, but can also produce a micro-motion in the length direction of the gripper finger, and which is not easily broken and has low manufacturing costs.

According to the present invention, a three-degree-of-freedom flexible hinge mechanism-typc piezoelectric micro-gripper as defined by claim 1 is provided. The dependent claims show some examples thereof. The technical solution adopted by the present invention to solve the above technical problem is: a three-degree-of-freedom flexible hinge mechanism-type piezoelectric micro-gripper, which comprises a first gripper finger and a second gripper finger, wherein a base is provided at the tails of the first gripper finger and the second gripper finger, a third flexible hinge and a first right-angled link are sequentially connected between the base and the first gripper finger, a fourth flexible hinge and a second right-angled link are sequentially connected between the base and the second gripper finger, and one or more x-direction drive units are provided between the first right-angled link and the second right-angled link, and are connected to the first right-angled link via a first flexible hinge and to the second right-angled link via a sccond flexible hinge; and the micro-gripper further comprises a y-direction drive unit acting on the base and a z-direction drive unit acting on the y-direction drive unit.

The y-direction drive unit is stacked above the base, and the z-direction drive unit is provided on a rear side of the base and form a gap therewith.

In a preferred embodiment, the y-direction drive unit comprises a second bridge-type amplification mechanism, a second piezoelectric actuator is provided in an abutting manner inside the second bridge-type amplification mechanism, and the second piezoelectric actuator is perpendicular to the first gripper finger and the second gripper finger.

The z-direction drive unit comprises a first bridge-type amplification mechanism, and a first piezoelectric actuator is provided in an abutting manner inside the first bridge-type amplification mechanism.

The base and the first bridge-type amplification mechanism are respectively screwed to two sides of the second bridge-type amplification mechanism, and the connected portions are respectively provided on two sides of the second piezoelectric actuator.

In a further preferred embodiment, the first bridge-type amplification mechanism comprises a first rigid body and a second rigid body respectively provided on two sides of the first piezoelectric actuator, a third rigid body and a fourth rigid body provided in an abutting manner at two ends of the first piezoelectric actuator, and first flexible sheets for connecting the first rigid body, the third rigid body, the second rigid body and the fourth rigid body in sequence.

The second bridge-type amplification mechanism comprises a fifth rigid body and a sixth rigid body respectively provided on two sides of the second piezoelectric actuator, a seventh rigid body and an eighth rigid body provided in an abutting manner at two ends of the second piezoelectric actuator, and second flexible sheets for connecting the fifth rigid body, the seventh rigid body, the sixth rigid body and the eighth rigid body in sequence. The fifth rigid body is screwed to the second rigid body, and the sixth rigid body is screwed to the base.

In a further preferred embodiment, the base comprises a protruding portion protruding toward the first gripper finger and the second gripper finger. The x-direction drive unit comprises a fourth bridge-type amplification mechanism connected between the first flexible hinge and the protruding portion, and a fifth bridge-type amplification mechanism connected between the second flexible hinge and the protruding portion; and a fourth piezoelectric actuator is provided in an abutting manner inside the fourth bridge-type amplification mechanism, a fifth piezoelectric actuator is provided in an abutting manner inside the fifth bridge-type amplification mechanism, and the fourth piezoelectric actuator and the fifth piezoelectric actuator are both parallel to the first gripper finger and the second gripper finger.

In a further preferred embodiment, the fourth bridge-type amplification mechanism comprises a thirteenth rigid body and a fourteenth rigid body respectively provided on two sides of the fourth piezoelectric actuator, a fifteenth rigid body and a sixteenth rigid body provided in an abutting manner at two ends of the fourth piezoelectric actuator, and fourth flexible sheets for connecting the thirteenth rigid body, the fifteenth rigid body, the fourteenth rigid body and the sixteenth rigid body in sequence. The thirteenth rigid body is connected to the first flexible hinge, and the fourteenth rigid body is connected to the protruding portion.

The fifth bridge-type amplification mechanism comprises a seventeenth rigid body and an eighteenth rigid body respectively provided on two sides of the fifth piezoelectric actuator, a nineteenth rigid body and a twentieth rigid body provided in an abutting manner at two ends of the fourth piezoelectric actuator, and fifth flexible sheets for connecting the seventeenth rigid body, the nineteenth rigid body, the eighteenth rigid body and the twentieth rigid body in sequence. The seventeenth rigid body is connected to the second flexible hinge, and the eighteenth rigid body is connected to the protruding portion.

In a further preferred embodiment, the first gripper finger, the first right-angled link, the first flexible hinge, the fourth bridge-type amplification mechanism, the fifth bridge-type amplification mechanism, the third flexible hinge, the base, the fourth flexible hinge, the second right-angled link, the second flexible hinge, and the second gripper finger form an integrally formed structure.

Compared with the prior art, a three-degree-of-freedom flexible hinge mechanism-type piezoelectric micro-gripper according to the present invention comprises a first gripper finger and a second gripper finger, wherein a base is provided at the tails of the first gripper finger and the second gripper finger, a third flexible hinge and a first right-angled link are sequentially connected between the base and the first gripper finger, a fourth flexible hinge and a second right-angled link are sequentially connected between the base and the second gripper finger, and one or more x-direction drive units are provided between the first right-angled link and the second right-angled link, and are connected to the first right-angled link via a first flexible hinge and to the second right-angled link via a second flexible hinge; and the micro-gripper further comprises a y-direction drive unit acting on the base and a z-direction drive unit acting on the y-direction drive unit, wherein the y-direction drive unit is stacked above the base, and the z-direction drive unit is provided on a rear side of the base and form a gap therewith. Compared with the prior art, the present invention has the advantages as follows:
1) the gripper fingers are highly flexible, and each gripper finger can not only produce micro-motions in a gripping direction (i.e., in the thickness direction of the gripper finger) and in a direction (i.e., in the height direction of the gripper finger) perpendicular to the gripping direction, but can also produce a micro-motion in the length direction of the gripper finger;
2) in the entire micro-gripper, the drive parts are stacked piezoelectric actuators, and the other parts are made of metal, so that the entire micro-gripper is not easily broken; and
3) in the entire micro-gripper, the parts (also constituting the main body part of the micro-gripper) other than the piezoelectric actuators, connection screws and pre-tightening screws are basically manufactured by wire cutting, so that the manufacturing cost is low.

### Brief description of the Drawings

Fig. 1 is a three-dimensional schematic structural diagram of the present invention;
Fig. 2 is an exploded schematic diagram of Fig. 1;
Fig. 3 is a schematic structural diagram of a z-direction drive unit in Fig. 2;
Fig. 4 is an exploded schematic diagram of Fig. 3;
Fig. 5 is a schematic structural diagram of a y-direction drive unit in Fig. 2;
Fig. 6 is an exploded schematic diagram of Fig. 5;
Fig. 7 is a schematic structural diagram of an x-direction drive unit and a gripper body connected to each other according to the present invention; and
Fig. 8 is an exploded schematic diagram of Fig. 7.

### Detailed Description of Embodiments

The embodiments of the present invention will be further described in detail below with reference to the accompanying drawings.

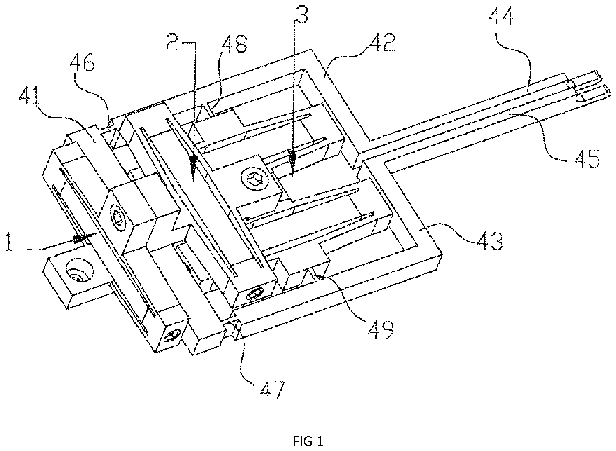

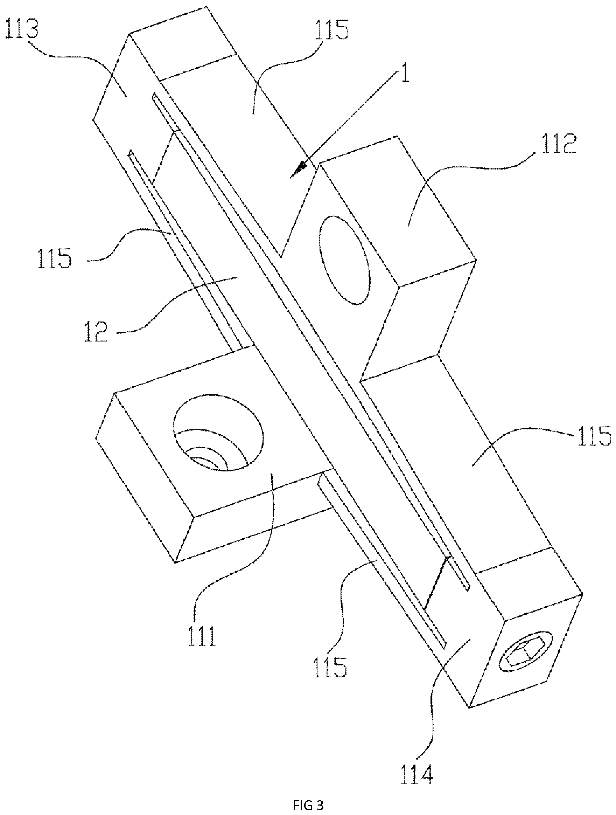

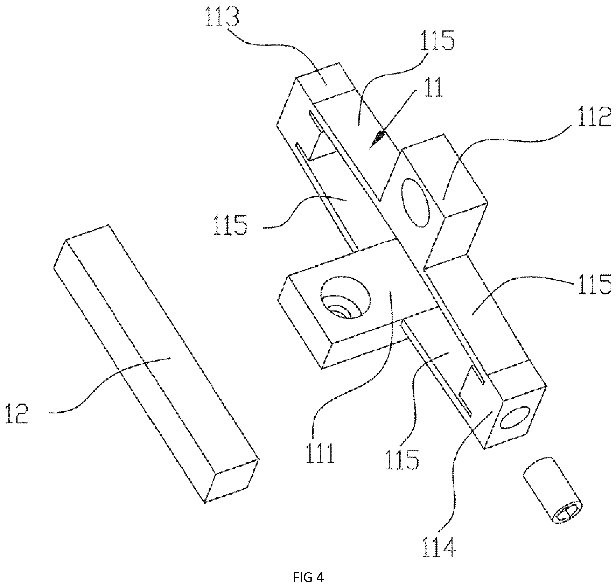

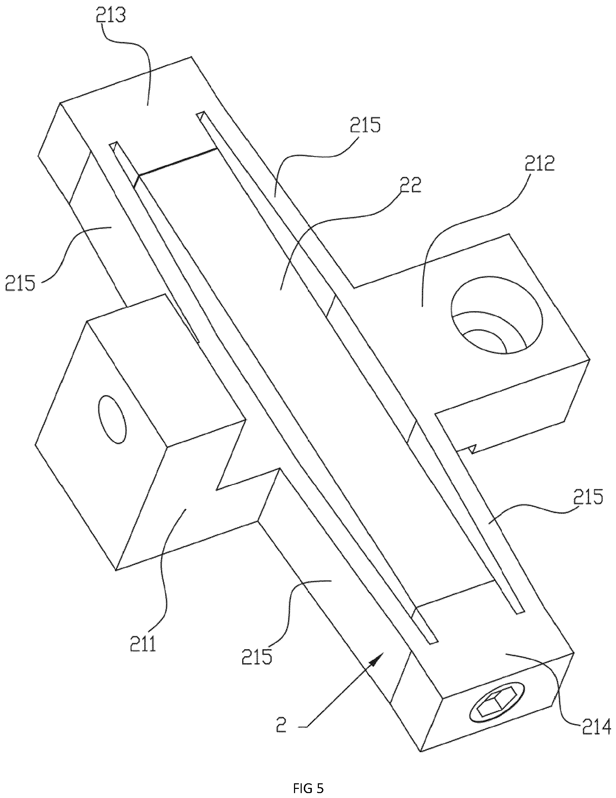

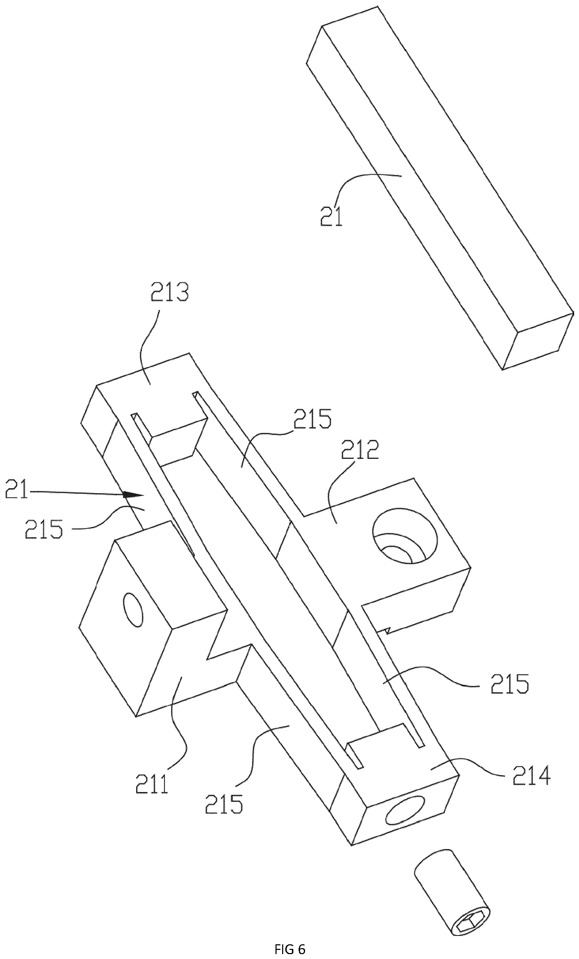

Figs. 1 to 8 are schematic structural diagrams of the present invention, in which the reference numerals are as follows: z-direction drive unit 1, first bridge-type amplification mechanism 11, first rigid body 111, second rigid body 112, third rigid body 113, fourth rigid body 114, first flexible sheet 115, first piezoelectric actuator 12, y-direction drive unit 2, second bridge-type amplification mechanism 21, fifth rigid body 211, sixth rigid body 212, seventh rigid body 213, eighth rigid body 214, second flexible sheet 215, second piezoelectric actuator 22, x-direction drive unit 3, fourth bridge-type amplification mechanism 33, thirteenth rigid body 331, fourteenth rigid body 332, fifteenth rigid body 333, sixteenth rigid body 334, fourth flexible sheet 335, fourth piezoelectric actuator 34, fifth bridge-type amplification mechanism 35, seventeenth rigid body 351, eighteenth rigid body 352, nineteenth rigid body 353, twentieth rigid body 354, fifth flexible sheet 355, fifth piezoelectric actuator 36, base 41, protruding portion 411, first right-angled link 42, second right-angled link 43, first gripper finger 44, second gripper finger 45, third flexible hinge 46, fourth flexible hinge 47, first flexible hinge 48, second flexible hinge 49.

As shown in Figs. 1 to 8, a three-degree-of-freedom flexible hinge mechanism-type piezoelectric micro-gripper comprises a first gripper finger 44 and a second gripper finger 45. A base 41 is provided at the tails of the first gripper finger 44 and the second gripper finger 45. A third flexible hinge 46 and a first right-angled link 42 are sequentially connected between the base 41 and the first gripper finger 44. A fourth flexible hinge 47 and a second right-angled link 43 are sequentially connected between the base 41 and the second gripper finger 45. One or more x-direction drive units 3 are provided between the first right-angled link 42 and the second right-angled link 43, and are connected to the first right-angled link 42 via a first flexible hinge 48 and to the second right-angled link 43 via a second flexible hinge 49. The first gripper finger 44, the second gripper finger 45, the first right-angled link 42, the third flexible hinge 46, the base 41, the fourth flexible hinge 47, the second right-angled link 43 and the second gripper finger 45 constitute a gripper body.

The micro-gripper further comprises a y-direction drive unit 2 acting on the base 41 and a z-direction drive unit 1 acting on the y-direction drive unit 2. The x-direction drive unit 3 can control the gripping and loosening of the first gripper finger 44 and the second gripper finger 45 in the x direction, the y-direction drive unit 2 is responsible for controlling the advance and retreat of the first gripper finger 44 and the second gripper finger 45 in the y direction, and the z-direction drive unit 1 is responsible for controlling the rising and falling of the first gripper finger 44 and the second gripper finger 45 in the z direction. The third flexible hinge 46 can increase the swinging flexibility of the first right-angled link 42, and the fourth flexible hinge 47 can increase the swinging flexibility of the second right-angled link 43. The first flexible hinge 48 and the second flexible hinge 49 enable the x-direction drive unit 3 to output a strict linear displacement. The first gripper finger 44 and the second gripper finger 45 can not only produce micro-motions in the width and thickness directions of the gripper fingers, but can also produce a micro-motion in the length direction of the gripper fingers, thereby forming three degrees of freedom of micro-motions in the x, y, and z directions. In addition, the micro-gripper is not easily broken and has low manufacturing costs.

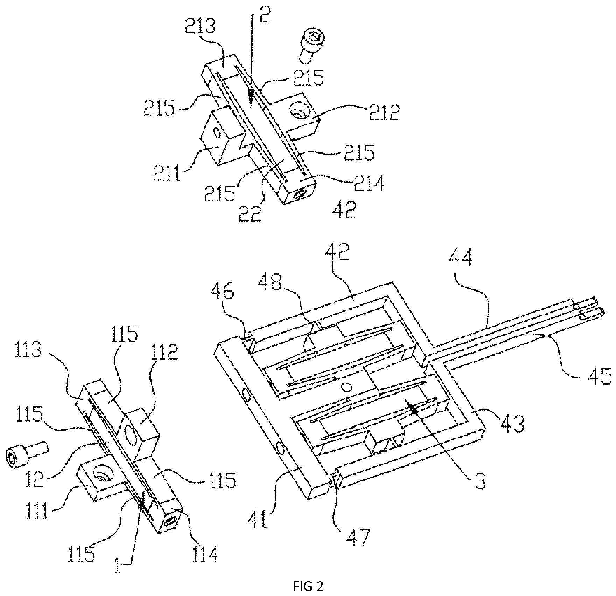

In an embodiment, as shown in Figs. 1 and 2, the y-direction drive unit 2 is stacked above the base 41, and the z-direction drive unit 1 is provided on the rear side of the base 41 and form a gap therewith, so that the micro-gripper is more compact.

In an embodiment, as shown in Figs. 2, 5 and 6, the y-direction drive unit 2 comprises a second bridge-type amplification mechanism 21. A second piezoelectric actuator 22 is provided in an abutting manner inside the second bridge-type amplification mechanism 21, and the second piezoelectric actuator 22 is perpendicular to the first gripper finger 44 and the second gripper finger 45. The z-direction drive unit 1 comprises a first bridge-type amplification mechanism 11. A first piezoelectric actuator 12 is provided in an abutting manner inside the first bridge-type amplification mechanism 11. The base 41 and the first bridge-type amplification mechanism 11 are respectively screwed to two sides of the second bridge-type amplification mechanism 21, and the connected portions are respectively provided on two sides of the second piezoelectric actuator 22.

When the second piezoelectric actuator 22 is energized and extended, the second bridge-type amplification mechanism 21 is stretched by the second piezoelectric actuator 22, the base 41 is then pulled toward the z-direction drive unit 1, and the first gripper finger 44 and the second gripper finger 45 finally retreat toward the z-direction drive unit 1 to complete the retreating operation. Conversely, when the second piezoelectric actuator 22 is de-energized, the first gripper finger 44 and the second gripper finger complete the advancing operation.

When the first piezoelectric actuator 12 is energized and extended, the first bridge-type amplification mechanism 11 is stretched by the first piezoelectric actuator 12, the y-direction drive unit 2 and the base 41 are then pulled toward a fixed portion of the first bridge-type amplification mechanism 11, and the first gripper finger 44 and the second gripper finger 45 finally complete the falling operation. Conversely, when the first piezoelectric actuator 12 is de-energized, the first gripper finger 44 and the second gripper finger 45 complete the rising operation.

In an embodiment, as shown in Figs. 2, 3 and 4, the first bridge-type amplification mechanism 11 comprises a first rigid body 111 and a second rigid body 112 respectively provided on two sides of the first piezoelectric actuator 12, a third rigid body 113 and a fourth rigid body 114 provided in an abutting manner at two ends of the first piezoelectric actuator 12, and first flexible sheets 115 for connecting the first rigid body 111, the third rigid body 113, the second rigid body 112 and the fourth rigid body 114 in sequence. The second bridge-type amplification mechanism 21 comprises a fifth rigid body 211 and a sixth rigid body 212 respectively provided on two sides of the second piezoelectric actuator 22, a seventh rigid body 213 and an eighth rigid body 214 provided in an abutting manner at two ends of the second piezoelectric actuator 22, and second flexible sheets 215 for connecting the fifth rigid body 211, the seventh rigid body 213, the sixth rigid body 212 and the eighth rigid body 214 in sequence. The fifth rigid body 211 is screwed to the second rigid body 112, and the sixth rigid body 212 is screwed to the base 41.

The first rigid body 111 is used as a fixed component. When the first piezoelectric actuator 12 is energized and extended, the third rigid body 113 and the fourth rigid body 114 are pushed apart, and at the same time, the distances between the first rigid body 111 and second rigid body 112 and the first piezoelectric actuator 12 are reduced, which directly causes the second rigid body 112 and the first piezoelectric actuator 12 to move toward the first rigid body 111, so that the y-direction drive unit 2 moves in the direction of the first rigid body 111 to finally complete the falling operation in the z direction. Conversely, when the first piezoelectric actuator 12 is de-energized and restored, the first bridge-type amplification mechanism 11 is restored, and pushes the y-direction drive unit 2 to rise and reset in the z direction.

When the second piezoelectric actuator 22 is energized and extended, the seventh rigid body 213 and the eighth rigid body 214 are pushed apart, and at the same time, the distances between the fifth rigid body 211 and sixth rigid body 212 and the second piezoelectric actuator 22 are reduced, which directly causes the sixth rigid body 212 and the second piezoelectric actuator 22 to move toward the fifth rigid body 211, so that the base 41 moves toward the fifth rigid body 211 to finally complete the retreating operation in the y direction. Conversely, when the second piezoelectric actuator 22 is de-energized and restored, the second bridge-type amplification mechanism 21 is restored, and pushes the base 41 to advance and reset in the y direction.

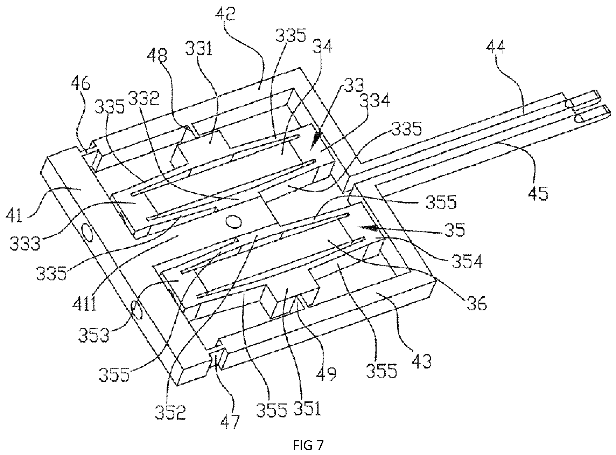

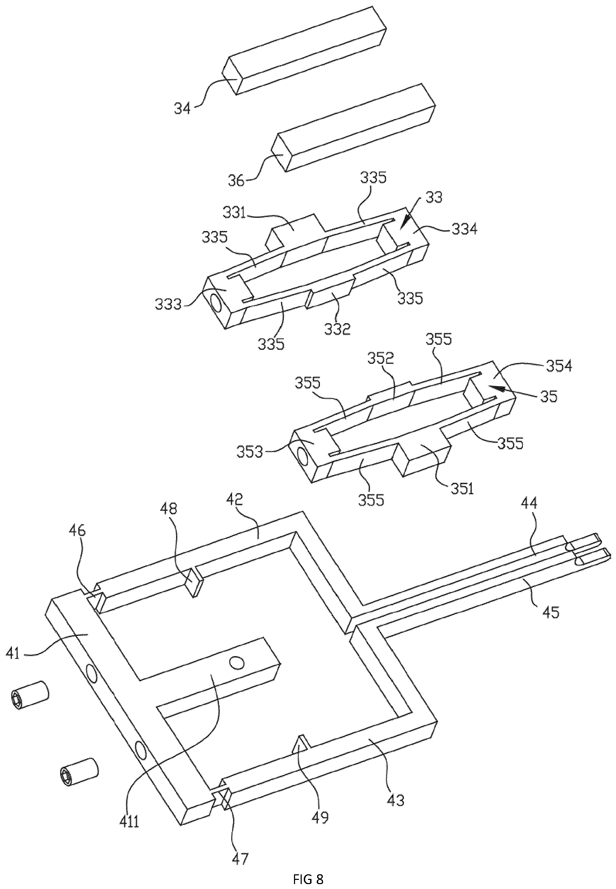

In an embodiment, as shown in Figs. 7 and 8, the base 41 comprises a protruding portion 411 protruding toward the first gripper finger 44 and the second gripper finger 45. The x-direction drive unit 3 comprises a fourth bridge-type amplification mechanism 33 connected between the first flexible hinge 48 and the protruding portion 411, and a fifth bridge-type amplification mechanism 35 connected between the second flexible hinge 49 and the protruding portion 411. A fourth piezoelectric actuator 34 is provided in an abutting manner inside the fourth bridge-type amplification mechanism 33, a fifth piezoelectric actuator 36 is provided in an abutting manner inside the fifth bridge-type amplification mechanism 35, and the fourth piezoelectric actuator 34 and the fifth piezoelectric actuator 36 are both parallel to the first gripper finger 44. When the fourth piezoelectric actuator 34 and the fifth piezoelectric actuator 36 are energized and extended, the fourth bridge-type amplification mechanism 33 and the fifth bridge-type amplification mechanism 35 are stretched, such that the first flexible hinge 48 and the second flexible hinge 49 pull the first right-angled link 42 and the second right-angled link 43, and the first gripper finger 44 and the second gripper finger 45 finally perform clamping in the x direction. Conversely, when the fourth piezoelectric actuator 34 and the fifth piezoelectric actuator 36 are de-energized and restored, the fourth bridge-type amplification mechanism 33 and the fifth bridge-type amplification mechanism 35 are restored, the first right-angled link 42 and the second right-angled link 43 are reset, and the first gripper finger 44 and the second gripper finger 45 finally perform loosening in the x direction.

In an embodiment, as shown in Figs. 7 and 8, the fourth bridge-type amplification mechanism 33 comprises a thirteenth rigid body 331 and a fourteenth rigid body 332 respectively provided on two sides of the fourth piezoelectric actuator 34, a fifteenth rigid body 333 and a sixteenth rigid body 334 provided in an abutting manner at two ends of the fourth piezoelectric actuator 34, and fourth flexible sheets 335 for connecting the thirteenth rigid body 331, the fifteenth rigid body 333, the fourteenth rigid body 332 and the sixteenth rigid body 334 in sequence. The thirteenth rigid body 331 is connected to the first flexible hinge 48, and the fourteenth rigid body 332 is connected to the protruding portion 411.

The fifth bridge-type amplification mechanism 35 comprises a seventeenth rigid body 351 and an eighteenth rigid body 352 respectively provided on two sides of the fifth piezoelectric actuator 36, a nineteenth rigid body 353 and a twentieth rigid body 354 provided in an abutting manner at two ends of the fourth piezoelectric actuator 34, and fifth flexible sheets 355 for connecting the seventeenth rigid body 351, the nineteenth rigid body 353, the eighteenth rigid body 352 and the twentieth rigid body 354 in sequence. The seventeenth rigid body 351 is connected to the second flexible hinge 49, and the eighteenth rigid body 352 is connected to the protruding portion 411.

In an embodiment, as shown in Fig. 7, the first gripper finger 44, the first right-angled link 42, the first flexible hinge 48, the fourth bridge-type amplification mechanism 33, the fifth bridge-type amplification mechanism 35, the third flexible hinge 46, the base 41, the fourth flexible hinge 47, the second right-angled link 43, the second flexible hinge 49, and the second gripper finger 45 form an integrally formed structure.

The operating principle of the present invention is as follows:
In a first step, the first piezoelectric actuator 12 is energized, the second rigid body 112 is moved in the z direction toward the first rigid body 111, and the y-direction drive unit 2, the x-direction drive unit 3 and the gripper body are driven to fall in the z direction.
In a second step, the second piezoelectric actuator 22 is energized, the second bridge-type amplification mechanism 21 is stretched by the second piezoelectric actuator 22, and the sixth rigid body 212 is moved toward the fifth rigid body 211, such that the base 41 and the entire gripper body are pulled toward the z-direction drive unit 1, and the first gripper finger 44 and the second gripper finger 45 complete the retreating operation in the y direction.
In a third step, the fourth piezoelectric actuator 34 and the fifth piezoelectric actuator 36 are energized, the fourth bridge-type amplification mechanism 33 and the fifth bridge-type amplification mechanism 35 are stretched to pull the first right-angled link 42 and the second right-angled link 43, and the first gripper finger 44 and the second gripper finger 45 finally clamp an object in the x direction.

The preferred embodiments of the present invention have been explained, and various changes or modifications can be made as long as they do not depart from the scope of the present invention defined by the appended claims.

## Claims

1. A three-degree-of-freedom flexible hinge mechanism-type piezoelectric micro-gripper, which comprises a first gripper finger (44) and a second gripper finger (45), wherein a base (41) is provided at the tails of the first gripper finger (44) and the second gripper finger (45), a third flexible hinge (46) and a first right-angled link (42) are sequentially connected between the base (41) and the first gripper finger (44), a fourth flexible hinge (47) and a second right-angled link (43) are sequentially connected between the base (41) and the second gripper finger (45), and an x-direction drive unit (3) is provided between the first right-angled link (42) and the second right-angled link (43), and is connected to the first right-angled link (42) via a first flexible hinge (48) and to the second right-angled link (43) via a second flexible hinge (49);
**characterized in that**
the micro-gripper further comprises a y-direction drive unit (2) acting on the base (41) and a z-direction drive unit (1) acting on the y-direction drive unit (2), wherein the y-direction drive unit (2) is stacked above the base (41), and the z-direction drive unit (1) is provided on a rear side of the base (41) and form a gap therewith.

2. The three-degree-of-freedom flexible hinge mechanism-type piezoelectric micro-gripper according to claim 1, wherein the y-direction drive unit (2) comprises a second bridge-type amplification mechanism (21), a second piezoelectric actuator (22) is provided in an abutting manner inside the second bridge-type amplification mechanism (21), and the second piezoelectric actuator (22) is perpendicular to the first gripper finger (44);
the z-direction drive unit (1) comprises a first bridge-type amplification mechanism (11), and a first piezoelectric actuator (12) is provided in an abutting manner inside the first bridge-type amplification mechanism (11); and
the base (41) and the first bridge-type amplification mechanism (11) are respectively screwed to two sides of the second bridge-type amplification mechanism (21), and the connected portions are respectively provided on two sides of the second piezoelectric actuator (22).

3. The three-degree-of-freedom flexible hinge mechanism-type piezoelectric micro-gripper according to claim 2, wherein the first bridge-type amplification mechanism (11) comprises a first rigid body (111) and a second rigid body (112) respectively provided on two sides of the first piezoelectric actuator (12), a third rigid body (113) and a fourth rigid body (114) provided in an abutting manner at two ends of the first piezoelectric actuator (12), and first flexible sheets (115) for connecting the first rigid body (111), the third rigid body (113), the second rigid body (112) and the fourth rigid body (114) in sequence;
the second bridge-type amplification mechanism (21) comprises a fifth rigid body (211) and a sixth rigid body (212) respectively provided on two sides of the second piezoelectric actuator (22), a seventh rigid body (213) and an eighth rigid body (214) provided in an abutting manner at two ends of the second piezoelectric actuator (22), and second flexible sheets (215) for connecting the fifth rigid body (211), the seventh rigid body (213), the sixth rigid body (212) and the eighth rigid body (214) in sequence; and the fifth rigid body (211) is screwed to the second rigid body (112), and the sixth rigid body (212) is screwed to the base (41).

4. The three-degree-of-freedom flexible hinge mechanism-type piezoelectric micro-gripper according to claim 3, wherein the base (41) comprises a protruding portion (411) protruding toward the first gripper finger (44) and the second gripper finger (45); the x-direction drive unit (3) comprises a fourth bridge-type amplification mechanism (33) connected between the first flexible hinge (48) and the protruding portion (411), and a fifth bridge-type amplification mechanism (35) connected between the second flexible hinge (49) and the protruding portion (411); and a fourth piezoelectric actuator (34) is provided in an abutting manner inside the fourth bridge-type amplification mechanism (33), a fifth piezoelectric actuator (36) is provided in an abutting manner inside the fifth bridge-type amplification mechanism (35), and the fourth piezoelectric actuator (34) and the fifth piezoelectric actuator (36) are both parallel to the first gripper finger (44) and the second gripper finger (45).

5. The three-degree-of-freedom flexible hinge mechanism-type piezoelectric micro-gripper according to claim 4, wherein the fourth bridge-type amplification mechanism (33) comprises a thirteenth rigid body (331) and a fourteenth rigid body (332) respectively provided on two sides of the fourth piezoelectric actuator (34), a fifteenth rigid body (333) and a sixteenth rigid body (334) provided in an abutting manner at two ends of the fourth piezoelectric actuator (34), and fourth flexible sheets (335) for connecting the thirteenth rigid body (331), the fifteenth rigid body (333), the fourteenth rigid body (332) and the sixteenth rigid body (334) in sequence; the thirteenth rigid body (331) is connected to the first flexible hinge (48), and the fourteenth rigid body (332) is connected to the protruding portion (411);
the fifth bridge-type amplification mechanism (35) comprises a seventeenth rigid body (351) and an eighteenth rigid body (352) respectively provided on two sides of the fifth piezoelectric actuator (36), a nineteenth rigid body (353) and a twentieth rigid body (354) provided in an abutting manner at two ends of the fourth piezoelectric actuator (34), and fifth flexible sheet (355) for connecting the seventeenth rigid body (351), the nineteenth rigid body (353), the eighteenth rigid body (352) and the twentieth rigid body (354) in sequence; and the seventeenth rigid body (351) is connected to the second flexible hinge (49), and the eighteenth rigid body (352) is connected to the protruding portion (411).

6. The three-degree-of-freedom flexible hinge mechanism-type piezoelectric micro-gripper according to either of claims 4 and 5, wherein the first gripper finger (44), the first right-angled link (42), the first flexible hinge (48), the fourth bridge-type amplification mechanism (33), the fifth bridge-type amplification mechanism (35), the third flexible hinge (46), the base (41), the fourth flexible hinge (47), the second right-angled link (43), the second flexible hinge (49), and the second gripper finger (45) form an integrally formed structure.

## Patentansprüche

1. Piezoelektrischer Mikro-Greifer mit flexiblem Scharniermechanismus mit drei Freiheitsgraden, der einen ersten Greiferfinger (44) und einen zweiten Greiferfinger (45) umfasst, wobei eine Basis (41) an den Enden von dem ersten Greiferfinger (44) und dem zweiten Greiferfinger (45) vorgesehen ist, ein drittes flexibles Scharnier (46) und ein erstes rechtwinkliges Gelenk (42) nacheinander zwischen der Basis (41) und dem ersten Greiferfinger (44) verbunden sind, ein viertes flexibles Scharnier (47) und ein zweites rechtwinkliges Gelenk (43) nacheinander zwischen der Basis (41) und dem zweiten Greiferfinger (45) verbunden sind und eine x-Richtungs-Antriebseinheit (3) zwischen dem ersten rechtwinkligen Gelenk (42) und dem zweiten rechtwinkligen Gelenk (43) vorgesehen ist und mit dem ersten rechtwinkligen Gelenk (42) über ein erstes flexibles Scharnier (48) und mit dem zweiten rechtwinkligen Gelenk (43) über ein zweites flexibles Scharnier (49) verbunden ist;
**dadurch gekennzeichnet, dass**
der Mikro-Greifer ferner eine y-Richtungs-Antriebseinheit (2) umfasst, die auf die Basis (41) wirkt, und eine z-Richtungs-Antriebseinheit (1), die auf die y-Richtungs-Antriebseinheit (2) wirkt, umfasst, wobei die y-Richtungs-Antriebseinheit (2) auf die Basis (41) gestapelt ist und die z-Richtungs-Antriebseinheit (1) auf einer Rückseite der Basis (41) vorgesehen ist und einen Spalt dazu bildet.

2. Piezoelektrischer Mikro-Greifer mit flexiblem Scharniermechanismus mit drei Freiheitsgraden nach Anspruch 1, wobei die y-Richtungs-Antriebseinheit (2) einen zweiten brückenartigen Verstärkungsmechanismus (21) umfasst, ein zweiter Piezoaktor (22) anliegend im Inneren des zweiten brückenartigen Verstärkungsmechanismus (21) vorgesehen ist und der zweite Piezoaktor (22) senkrecht zu dem ersten Greiferfinger (44) ist;
die z-Richtungs-Antriebseinheit (1) einen ersten brückenartigen Verstärkungsmechanismus (11) umfasst und ein erster Piezoaktor (12) anliegend im Innern des ersten brückenartigen Verstärkungsmechanismus (11) vorgesehen ist; und
die Basis (41) und der erste brückenartige Verstärkungsmechanismus (11) mit jeweils einer von zwei Seiten des zweiten brückenartigen Verstärkungsmechanismus (21) verschraubt sind und die verbundenen Abschnitte jeweils auf einer von zwei Seiten des zweiten Piezoaktors (22) vorgesehen sind.

3. Piezoelektrischer Mikro-Greifer mit flexiblem Scharniermechanismus mit drei Freiheitsgraden nach Anspruch 2, wobei der erste brückenartige Verstärkungsmechanismus (11) einen ersten steifen Körper (111) und einen zweiten steifen Körper (112), die auf jeweils einer von zwei Seiten des ersten Piezoaktors (12) vorgesehen sind, einen dritten steifen Körper (113) und einen vierten steifen Körper (114), die anliegend an zwei Enden des ersten Piezoaktors (12) vorsehen sind, und erste flexible Platten (115) zum Verbinden des ersten steifen Körpers (111), des dritten steifen Körpers (113), des zweiten steifen Körpers (112) und des vierten steifen Körpers (114) nacheinander umfasst;
der zweite brückenartige Verstärkungsmechanismus (21) einen fünften steifen Körper (211) und einen sechsten steifen Körper (212), die auf jeweils einer von zwei Seiten des zweiten Piezoaktors (22) vorgesehen sind, einen siebten steifen Körper (213) und einen achten steifen Körper (214), die anliegend an zwei Enden des zweiten Piezoaktors (22) vorsehen sind, und zweite flexible Platten (215) zum Verbinden des fünften steifen Körpers (211), des siebten steifen Körpers (213), des sechsten steifen Körpers (212) und des achten steifen Körpers (214) nacheinander umfasst; und der fünfte steife Körper (211) mit dem zweiten steifen Körper (112) verschraubt ist und der sechste steife Körper (212) mit der Basis (41) verschraubt ist.

4. Piezoelektrischer Mikro-Greifer mit flexiblem Scharniermechanismus mit drei Freiheitsgraden nach Anspruch 3, wobei die Basis (41) einen vorstehenden Abschnitt (411) umfasst, der in Richtung des ersten Greiferfingers (44) und des zweiten Greiferfingers (45) vorsteht; die x-Richtungs-Antriebseinheit (3) einen vierten brückenartigen Verstärkungsmechanismus (33), der zwischen dem ersten flexiblen Scharnier (48) und dem vorstehenden Abschnitt (411) verbunden ist, und einen fünften brückenartigen Verstärkungsmechanismus (35), der zwischen dem zweiten flexiblen Scharnier (49) und dem vorstehenden Abschnitt (411) verbunden ist, umfasst; und ein vierter Piezoaktor (34) anliegend im Inneren des vierten brückenartigen Verstärkungsmechanismus (33) vorgesehen ist, ein fünfter Piezoaktor (36) anliegend im Inneren des fünften brückenartigen Verstärkungsmechanismus (35) vorgesehen ist und der vierte Piezoaktor (34) und der fünfte Piezoaktor (36) beide parallel zu dem ersten Greiferfinger (44) und dem zweiten Greiferfinger (45) sind.

5. Piezoelektrischer Mikro-Greifer mit flexiblem Scharniermechanismus mit drei Freiheitsgraden nach Anspruch 4, wobei der vierte brückenartige Verstärkungsmechanismus (33) einen dreizehnten steifen Körper (331) und einen vierzehnten steifen Körper (332), die jeweils auf einer von zwei Seiten des vierten Piezoaktors (34) vorgesehen sind, einen fünfzehnten steifen Körper (333) und einen sechzehnten steifen Körper (334), die anliegend an zwei Enden des vierten Piezoaktors (34) vorgesehen sind, und vierte flexible Platten (335) zum Verbinden des dreizehnten steifen Körpers (331), des fünfzehnten steifen Körpers (333), des vierzehnten steifen Körpers (332) und des sechzehnten steifen Körpers (334) nacheinander umfasst; der dreizehnte steife Körper (331) mit dem ersten flexiblen Scharnier (48) verbunden ist und der vierzehnte steife Körper (332) mit dem vorstehenden Abschnitt (411) verbunden ist;
der fünfte brückenartige Verstärkungsmechanismus (35) einen siebzehnten steifen Körper (351) und einen achtzehnten steifen Körper (352), die jeweils auf einer von zwei Seiten des fünften Piezoaktors (36) vorgesehen sind, einen neunzehnten steifen Körper (353) und einen zwanzigsten steifen Körper (354), die anliegend an zwei Enden des vierten Piezoaktors (34) vorgesehen sind, und eine fünfte flexible Platte (355) zum Verbinden des siebzehnten steifen Körpers (351), des neunzehnten steifen Körpers (353), des achtzehnten steifen Körpers (352) und des zwanzigsten steifen Körpers (354) nacheinander umfasst; und der siebzehnte steife Körper (351) mit dem zweiten flexiblen Scharnier (49) verbunden ist und der achtzehnte steife Körper (352) mit dem vorstehenden Abschnitt (411) verbunden ist.

6. Piezoelektrischer Mikro-Greifer mit flexiblem Scharniermechanismus mit drei Freiheitsgraden nach einem der Ansprüche 4 und 5, wobei der erste Greiferfinger (44), das erste rechtwinklige Gelenk (42), das erste flexible Scharnier (48), der vierte brückenartige Verstärkungsmechanismus (33), der fünfte brückenartige Verstärkungsmechanismus (35), das dritte flexible Scharnier (46), die Basis (41), das vierte flexible Scharnier (47), das zweite rechtwinklige Gelenk (43), das zweite flexible Scharnier (49) und der zweite Greiferfinger (45) eine einstückig ausgebildete Struktur bilden.

## Revendications

1. Micro-pince piézoélectrique de type mécanisme à charnière flexible à trois degrés de liberté, qui comprend un premier doigt de préhension (44) et un second doigt de préhension (45), dans laquelle une base (41) est prévue au niveau des queues du premier doigt de préhension (44) et du second doigt de préhension (45), une troisième charnière flexible (46) et une première liaison à angle droit (42) sont séquentiellement reliées entre la base (41) et le premier doigt de préhension (44), une quatrième charnière flexible (47) et une seconde liaison à angle droit (43) sont séquentiellement reliées entre la base (41) et le second doigt de préhension (45), et une unité d'entraînement dans le sens x (3) est prévue entre la première liaison à angle droit (42) et la seconde liaison à angle droit (43), et est reliée à la première liaison à angle droit (42) par l'intermédiaire d'une première charnière flexible (48) et à la seconde liaison à angle droit (43) par l'intermédiaire d'une deuxième charnière flexible (49) ;
**caractérisée en ce que**
la micro-pince comprend en outre une unité d'entraînement dans le sens y (2) agissant sur la base (41) et une unité d'entraînement dans le sens z (1) agissant sur l'unité d'entraînement dans le sens y (2), dans laquelle l'unité d'entraînement dans le sens y (2) est empilée au-dessus de la base (41), et l'unité d'entraînement dans le sens z (1) est prévue sur un côté arrière de la base (41) et forme un espace avec celle-ci.

2. Micro-pince piézoélectrique de type mécanisme à charnière flexible à trois degrés de liberté selon la revendication 1, dans laquelle l'unité d'entraînement dans le sens y (2) comprend un deuxième mécanisme d'amplification de type pont (21), un deuxième actionneur piézoélectrique (22) est prévu en butée à l'intérieur du deuxième mécanisme d'amplification de type pont (21), et le deuxième actionneur piézoélectrique (22) est perpendiculaire au premier doigt de préhension (44) ;
l'unité d'entraînement dans le sens z (1) comprend un premier mécanisme d'amplification de type pont (11), et un premier actionneur piézoélectrique (12) est prévu en butée à l'intérieur du premier mécanisme d'amplification de type pont (11) ; et
la base (41) et le premier mécanisme d'amplification de type pont (11) sont vissés respectivement sur deux côtés du deuxième mécanisme d'amplification de type pont (21), et les parties reliées sont prévues respectivement sur deux côtés du deuxième actionneur piézoélectrique (22).

3. Micro-pince piézoélectrique de type mécanisme à charnière flexible à trois degrés de liberté selon la revendication 2, dans laquelle le premier mécanisme d'amplification de type pont (11) comprend un premier corps rigide (111) et un deuxième corps rigide (112) prévus respectivement sur deux côtés du premier actionneur piézoélectrique (12), un troisième corps rigide (113) et un quatrième corps rigide (114) prévus en butée au niveau de deux extrémités du premier actionneur piézoélectrique (12), et des premières feuilles flexibles (115) pour relier le premier corps rigide (111), le troisième corps rigide (113), le deuxième corps rigide (112) et le quatrième corps rigide (114) en séquence ;
le deuxième mécanisme d'amplification de type pont (21) comprend un cinquième corps rigide (211) et un sixième corps rigide (212) prévus respectivement sur deux côtés du deuxième actionneur piézoélectrique (22), un septième corps rigide (213) et un huitième corps rigide (214) prévus en butée au niveau de deux extrémités du deuxième actionneur piézoélectrique (22), et des deuxièmes feuilles flexibles (215) pour relier le cinquième corps rigide (211), le septième corps rigide (213), le sixième corps rigide (212) et le huitième corps rigide (214) en séquence ; et le cinquième corps rigide (211) est vissé sur le deuxième corps rigide (112), et le sixième corps rigide (212) est vissé sur la base (41).

4. Micro-pince piézoélectrique de type à mécanisme de fente flexible à trois degrés de liberté selon la revendication 3, dans laquelle la base (41) comprend une partie en saillie (411) faisant saillie vers le premier doigt de préhension (44) et le second doigt de préhension (45) ; l'unité d'entraînement dans le sens x (3) comprend un quatrième mécanisme d'amplification de type pont (33) relié entre la première charnière flexible (48) et la partie en saillie (411), et un cinquième mécanisme d'amplification de type pont (35) relié entre la deuxième charnière flexible (49) et la partie en saillie (411) ; et un quatrième actionneur piézoélectrique (34) est prévu en butée à l'intérieur du quatrième mécanisme d'amplification de type pont (33), un cinquième actionneur piézoélectrique (36) est prévu en butée à l'intérieur du cinquième mécanisme d'amplification de type pont (35), et le quatrième actionneur piézoélectrique (34) et le cinquième actionneur piézoélectrique (36) sont tous deux parallèles au premier doigt de préhension (44) et au second doigt de préhension (45) .

5. Micro-pince piézoélectrique de type mécanisme à charnière flexible à trois degrés de liberté selon la revendication 4, dans laquelle le quatrième mécanisme d'amplification de type pont (33) comprend un treizième corps rigide (331) et un quatorzième corps rigide (332) prévus respectivement sur deux côtés du quatrième actionneur piézoélectrique (34), un quinzième corps rigide (333) et un seizième corps rigide (334) prévus en butée au niveau de deux extrémités du quatrième actionneur piézoélectrique (34), et des quatrièmes feuilles flexibles (335) pour relier le treizième corps rigide (331), le quinzième corps rigide (333), le quatorzième corps rigide (332) et le seizième corps rigide (334) en séquence ; le treizième corps rigide (331) est relié à la première charnière flexible (48), et le quatorzième corps rigide (332) est relié à la partie en saillie (411) ;
le cinquième mécanisme d'amplification de type pont (35) comprend un dix-septième corps rigide (351) et un dix-huitième corps rigide (352) prévus respectivement sur deux côtés du cinquième actionneur piézoélectrique (36), un dix-neuvième corps rigide (353) et un vingtième corps rigide (354) prévus en butée au niveau de deux extrémités du quatrième actionneur piézoélectrique (34), et une cinquième feuille flexible (355) pour relier le dix-septième corps rigide (351), le dix-neuvième corps rigide (353), le dix-huitième corps rigide (352) et le vingtième corps rigide (354) en séquence ; et le dix-septième corps rigide (351) est relié à la deuxième charnière flexible (49), et le dix-huitième corps rigide (352) est relié à la partie en saillie (411).

6. Micro-pince piézoélectrique de type mécanisme à charnière flexible à trois degrés de liberté selon l'une quelconque des revendications 4 et 5, dans laquelle le premier doigt de préhension (44), la première liaison à angle droit (42), la première charnière flexible (48), le quatrième mécanisme d'amplification de type pont (33), le cinquième mécanisme d'amplification de type pont (35), la troisième charnière flexible (46), la base (41), la quatrième charnière flexible (47), la seconde liaison à angle droit (43), la deuxième charnière flexible (49) et le second doigt de préhension (45) forment une structure formée d'un seul tenant.
